# FASCICULE DE BREVET EUROPEEN

(11) **EP 0 979 681 B1**
(45) Date de publication et mention de la délivrance du brevet: **11.08.2004**
(21) Numéro de dépôt: 99490021.5
(22) Date de dépôt: 26.07.1999
(51) Int. Cl.: B05B 1/00, A01G 25/16, G01F 1/36, G01F 1/38

(54) **Pièce tubulaire pour équiper l'extrémité d'un tuyau d'arrosage**
Rohrförmiges Mundstück für ein Ende eines Gartenschlauches
Tubular mouth piece for an extremity of an irrigation hose

(30) Priorité: 11.08.1998 FR 9810451
(43) Date de publication de la demande: 16.02.2000
(73) Titulaire: Société SOTEP, 60310 Roye sur Matz (FR)
(72) Inventeur: Begassat, Michel Sylvain, 60510 Therdonne (FR)
(74) Mandataire: Hennion, Jean-Claude

(56) Documents cités:
- EP-A- 0 602 629
- GB-A- 1 396 377
- US-A- 4 570 857
- US-A- 5 540 102
- PATENT ABSTRACTS OF JAPAN vol. 098, no. 004, 31 mars 1998 (1998-03-31) & JP 09 314074 A (TONE CORP:KK), 9 décembre 1997 (1997-12-09)

## Description

L'invention se rapporte à une pièce tubulaire pour équiper l'extrémité d'un tuyau d'arrosage.

La croissance des plantes d'un jardin dépend, notamment, de l'eau contenue dans le sol.

En été, l'évaporation et le manque de pluie diminuent rapidement le taux d'humidité, ce qui nuit à la croissance des plantes.

Notamment, pour compenser les pertes par évaporation, les jardiniers et plus précisément ceux chargés des pelouses des stades de sports font des apports réguliers en eau.

Ces apports doivent être suffisants mais non excessifs.

Par un simple relevé d'un compteur d'eau placé en amont du système d'arrosage, ils peuvent gérer la quantité d'eau apportée par mètre carré.

Ce compteur d'eau peut être celui du stade ou, dans des circonstances plus favorables, un compteur d'eau dédié à l'installation d'arrosage fixe.

Le particulier peut également consulter son compteur d'eau mais cela n'est pas toujours très pratique, compte tenu de leur localisation qui se fait généralement au fond d'une fosse située à l'extérieur de l'habitation.

On connaît des systèmes d'arrosage automatique qui sont, pour leur partie commande, constitués par une horloge qui commande l'ouverture et la fermeture d'électrovannes placées en amont de lances d'arrosage.

Sur les systèmes un peu plus élaborés, des sondes mesurant l'humidité du sol peuvent commander le déclenchement de l'arrosage.

Ces systèmes déterminent un temps d'arrosage mais pas un débit d'eau.

Beaucoup de particuliers qui ne sont pas équipés de ces systèmes, car relativement onéreux, souhaiteraient cependant connaître approximativement la quantité d'eau et/ou le temps d'arrosage nécessaire pour leur jardin.

L'invention se propose de remédier notamment aux problèmes évoqués ci dessus.

A cet effet, l'invention a pour objet une pièce tubulaire pour équiper l'extrémité d'un tuyau d'arrosage comprenant :
- un corps délimitant un canal par lequel transite l'eau provenant du tuyau et
- à l'une des deux extrémités du corps de la pièce tubulaire un moyen de liaison avec l'extrémité du tuyau d'arrosage,
cette pièce tubulaire étant caractérisée en ce qu'elle comprend en outre :
- un palpeur mobile selon un axe sensiblement parallèle à l'axe longitudinal du canal, lequel palpeur est soumis, au moins indirectement, à la pression du fluide circulant dans le canal précité,
- un curseur se déplacant au long d'une échelle graduée s'étendant parallèlement à l'axe longitudinal du canal et
- un moyen mécanique de corrélation du déplacement du curseur en fonction du déplacement du palpeur et de la section du canal pour indiquer un débit instantané.

L'invention sera bien comprise à la lecture de la description ci-après faite à titre d'exemple non limitatif et en regard des dessins qui représentent ci après :

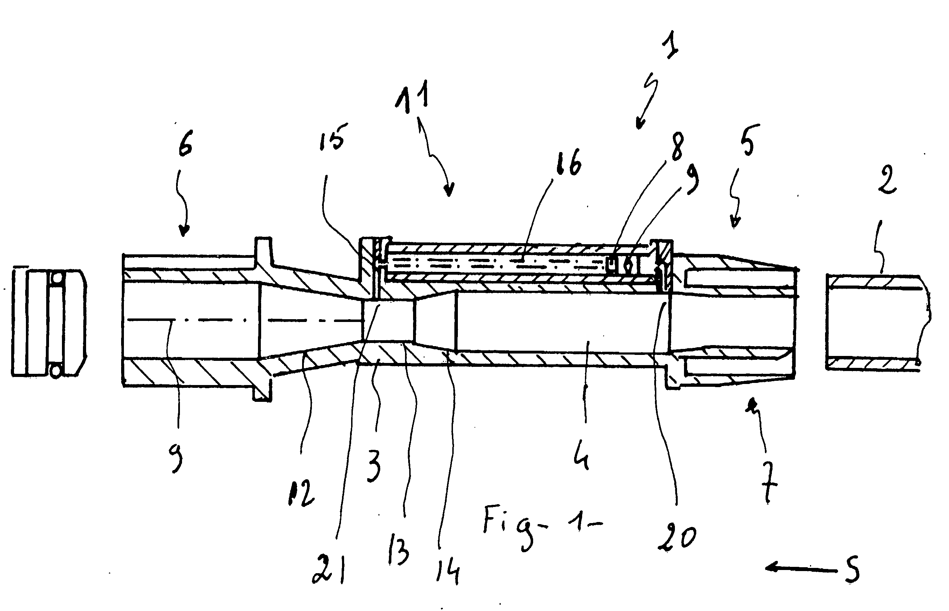

- figure 1 : une coupe axiale de la pièce tubulaire,

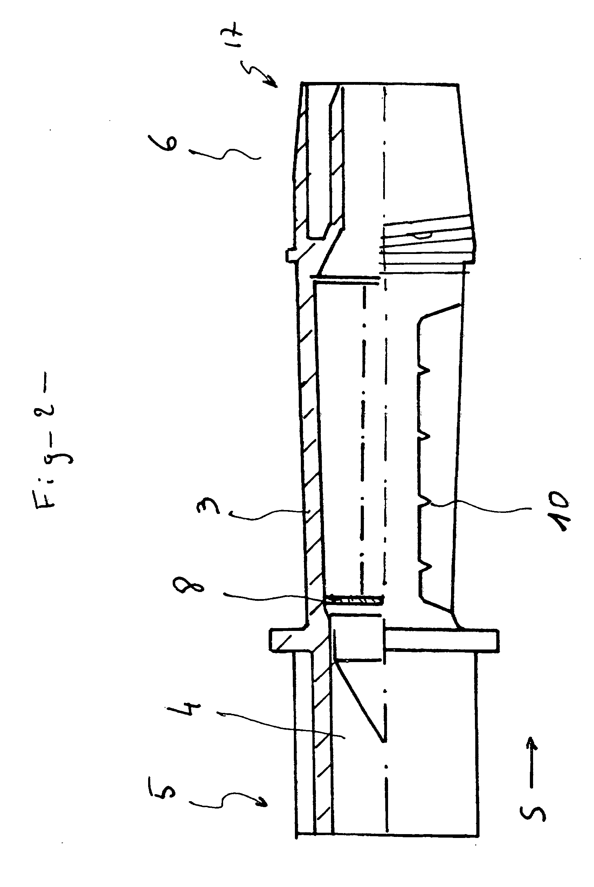

- figure 2 : une variante de la coupe axiale de la pièce tubulaire.

En se reportant au dessin, on voit que l'extrémité d'un tuyau 2 d'arrosage est équipée d'une pièce 1 tubulaire.

Classiquement, cette pièce 1 tubulaire pour équiper l'extrémité d'un tuyau d'arrosage comprend :
- un corps 3 délimitant un canal 4 par lequel transite l'eau provenant du tuyau et
- à l'une (5) des deux extrémités 5, 6 du corps de la pièce tubulaire, un moyen 7 de liaison avec l'extrémité du tuyau d'arrosage.

Selon l'invention, cette pièce 1 tubulaire comprend en outre :
- un palpeur 8 mobile selon un axe sensiblement parallèle à l'axe 9 longitudinal du canal 4, lequel palpeur 8 est soumis, au moins indirectement, à la pression du fluide circulant dans le canal précité,
- un curseur 9 se déplacant au long d'une échelle 10 graduée s'étendant parallèlement à l'axe longitudinal du canal et
- un moyen 11 mécanique de corrélation du déplacement du curseur 9 en fonction du déplacement du palpeur 8 et de la section du canal pour indiquer un débit instantané.

Dans une forme avantageuse de réalisation :
- d'une part, le canal présente successivement, dans le sens S du déplacement de l'eau, un tronçon 14 de section convergente, un tronçon 13 de section constante et un tronçon 12 de section divergente pour former un tube de venturi et
- d'autre part, un canal 15 dit de dérivation dont l'entrée 20 se situe en amont du tronçon convergent et la sortie 21 au niveau du tronçon de section constante, ce canal de dérivation logeant le palpeur qui, d'un coté, est soumis à la pression de l'eau et de l'autre côté à un ressort 16.

On sait, en effet, que, dans un tube de Venturi, la différence de pression entre l'entrée du tube et le col représenté par la section constante est proportionnelle au carré du débit.

Avec un tel montage, on obtient ainsi une indication du débit.

Dans une variante de réalisation, le palpeur est logé directement dans le canal qui est au moins localement transparent.

Lorsque le canal de dérivation est au moins localement transparent, le palpeur 9 peut en effet constituer directement le curseur 10 indiquant le débit.

Un tel dispositif est simple à réaliser et d'un coût réduit.

L'autre extrémité 6 de cette pièce 1 tubulaire présente, par exemple, un autre 17 moyen de liaison avec un accessoire 18, ce moyen de liaison pouvant être du type à raccord rapide.

Dans une variante de réalisation, cette autre extrémité peut se prolonger par une lance d'arrosage avec classiquement un moyen de réglage du débit par obturation partielle de la section de passage.

## Revendications

1. Pièce tubulaire (1) pour équiper l'extrémité d'un tuyau (2) d'arrosage comprenant :
- un corps (3) délimitant un canal (4) par lequel transite l'eau provenant du tuyau et
- à l'une (5) des deux extrémités (5, 6) du corps de la pièce tubulaire, un moyen (7) de liaison avec l'extrémité du tuyau d'arrosage,
cette pièce étant **CARACTERISEE en ce qu'**elle comprend :
- un palpeur (8) mobile selon un axe sensiblement parallèle à l'axe (9) longitudinal du canal (4), lequel palpeur (8) est soumis, au moins indirectement, à la pression du fluide circulant dans le canal précité,
- un curseur (9) se déplacant au long d'une échelle (10) graduée s'étendant parallèlement à l'axe longitudinal du canal et
- un moyen (11) mécanique de corrélation du déplacement du curseur (9) en fonction du déplacement du palpeur (8) et de la section du canal pour indiquer un débit instantané.

2. Pièce tubulaire selon la revendication 1 **caractérisée en ce que** :
- d'une part, le canal présente successivement, dans le sens (S) du déplacement de l'eau, un tronçon (14) de section convergente, un tronçon (13) de section constante et un tronçon (12) de section divergente pour former un tube de venturi et
- d'autre part, un canal (15) dit de dérivation dont l'entrée (20) se situe en amont du tronçon convergent et la sortie (21) au niveau du tronçon de section constante, ce canal de dérivation logeant le palpeur qui, d'un coté, est soumis à la pression de l'eau et de l'autre côté à un ressort (16).

3. Pièce tubulaire selon la revendication 1 **caractérisée en ce que** le palpeur est logé directement dans le canal qui est au moins localement transparent.

4. Pièce tubulaire selon la revendication 2 **caractérisée en ce que**, lorsque le canal de dérivation est au moins localement transparent, le palpeur (9) constitue directement le curseur (10) indiquant le débit.

5. Pièce tubulaire selon la revendication 1 **caractérisée en ce que** l'une (6) des extrémités (5, 6) de cette pièce (1) tubulaire présente, un autre (17) moyen de liaison avec un accessoire (18), ce moyen de liaison pouvant être du type à raccord rapide.

6. Pièce tubulaire selon la revendication 1 **caractérisée en ce que** l'extrémité (6) des extrémités (5, 6) se prolonge par une lance d'arrosage avec classiquement un moyen de réglage du débit par obturation partielle de la section de passage.

## Patentansprüche

1. Rohrstück (1) zum Aufsetzen auf das Ende eines Bewässerungsschlauches (2), das umfasst:
- einen Körper (3), der einen Kanal (4) begrenzt, durch den das aus dem Schlauch stammende Wasser fließt, und
- eine Einrichtung (7) zum Verbinden mit dem Ende des Bewässerungsschlauches an einem Ende (5) der beiden Enden (5, 6) des Körpers des Rohrstückes,
wobei dieses Rohrstück **dadurch gekennzeichnet ist, dass** es umfasst:
- einen Sensor (8), der beweglich ist entlang einer Achse, die im Wesentlichen parallel zu der Längsachse (9) des Kanals (4) verläuft, wobei der Sensor (8) zumindest indirekt dem Druck der in dem vorgenannten Kanal zirkulierenden Flüssigkeit ausgesetzt ist,
- einen Schieber (9), der sich entlang einer graduierten Skala (10) verschiebt, die sich parallel zur Längsachse des Kanals erstreckt, und
- eine mechanische Einrichtung (11), um die Verschiebung des Schiebers (9) als Funktion der Verschiebung des Sensors (8) mit dem Querschnitt des Kanals in Korrelation zu bringen, um die momentane Durchflussmenge anzuzeigen.

2. Rohrstück nach Anspruch 1, **dadurch gekennzeichnet, dass**
- der Kanal einerseits nacheinander aufweist in der Richtung (S) des strömenden Wassers, einen Abschnitt (14) mit einem konvergierenden Querschnitt, einen Abschnitt (13) mit einem konstanten Querschnitt und einen Abschnitt (12) mit einem divergierenden Querschnitt, unter Bildung eines Venturi-Rohres, und
- andererseits einen Kanal (15), als Abzweigungskanal bezeichnet, dessen Eingang (20) stromaufwärts von dem konvergierenden Abschnitt und dem Ausgang (21) im Bereich des Abschnitts mit konstantem Querschnitt angeordnet ist, wobei dieser Abzweigungskanal den Sensor aufnimmt, der einerseits dem Druck des Wassers und andererseits dem Druck einer Feder (16) ausgesetzt ist.

3. Rohrstück nach Anspruch 1, **dadurch gekennzeichnet, dass** der Sensor direkt in dem Kanal angeordnet ist, der zumindest lokal transparent ist.

4. Rohrstück nach Anspruch 2, **dadurch gekennzeichnet, dass** dann, wenn der Abzweigungskanal mindestens lokal transparent ist, der Sensor (9) direkt den Schieber (10) darstellt, der die Durchflussmenge anzeigt.

5. Rohrstück nach Anspruch 1, **dadurch gekennzeichnet, dass** ein Ende (6) der Enden (5, 6) dieses Rohrstückes (1) eine andere Einrichtung (17) zum Verbinden mit einem Zubehörteil (18) aufweist, wobei diese Verbindungseinrichtung eine solche vom Schnellkupplungs-Typ sein kann.

6. Rohrstück nach Anspruch 1, **dadurch gekennzeichnet, dass** das Ende (6) der Enden (5, 6) verlängert ist um ein Sprengrohr, das eine klassische Einrichtung zur Regelung der Durchflussmenge durch partielles Verschließen des Durchgangs-Querschnitts aufweist.

## Claims

1. Tubular mouthpiece (1) to equip the extremity of an irrigation hose (2) including the following:
- a body (3) marking a channel (4) through which water from the tube passes and
- at one (5) of the two extremities (5, 6) of the body of the tubular mouthpiece, a device (7) for liaison with the extremity of the irrigation hose,
**characterised in that** it includes the following:
- a mobile sensor (8) according to an axis significantly parallel to the longitudinal axis (9) of the channel (4); this sensor (8) is subject, at least indirectly, to the pressure of the fluid circulating in the aforesaid channel;
- a cursor (9) which moves along a graduated scale (10) which extend parallel to the longitudinal axis of the channel and
- a mechanical device (11) for correlation of the movement of the cursor (9) according to the movement of the sensor (8) and the section of the channel in order to indicate an instantaneous output.

2. Tubular part according to claim 1 **characterised in that**:
- on the one hand, the channel successively presents, in direction S) of the movement of the water, a length (14) of convergent section, a length (13) of constant section and a length (12) of divergent section in order to form a venturi tube and
- on the other hand, a so-called derivation channel (15) the entrance (20) of which is located upstream of the convergent section and the output (21) at the level of the length of constant section; this derivation channel houses the sensor which is subject to the pressure of the water on one side and to a spring on the other (16).

3. Tubular part according to claim 1 **characterised in that** the sensor is housed directly in the channel which is at least locally transparent.

4. Tubular part according to claim 2 **characterised in that**, when the derivation channel is at least locally transparent, the sensor (9) directly constitutes the cursor (10) indicating the output.

5. Tubular part according to claim 1, **characterised in that** one (6) of the extremities (5, 6) of this tubular part (1) presents another liaison device (17) with an accessory (18); this device may be of the fast connection type.

6. Tubular part according to claim 1, **characterised in that** the extremity (6) of the extremities (5, 6) is prolonged by an irrigation nozzle with, classically, an output adjustment device by partial sealing of the section of passage.
